**Europäisches Patentamt**

**European Patent Office**

**Office européen des brevets**

(19)

(11) Veröffentlichungsnummer: **0 151 772**
**B1**

# EUROPÄISCHE PATENTSCHRIFT

(12)

(45) Veröffentlichungstag der Patentschrift:
02.08.89

(21) Anmeldenummer: 84115819.9

(22) Anmeldetag: 19.12.84

(51) Int. Cl.⁴: **A 23 F 5/26**, A 23 F 5/18

(54) Verfahren zum Herstellen von Kaffee-Extrakt.

(30) Priorität: 12.01.84 DE 3400768

(43) Veröffentlichungstag der Anmeldung:
21.08.85 Patentblatt 85/34

(45) Bekanntmachung des Hinweises auf die Patenterteilung:
02.08.89 Patentblatt 89/31

(84) Benannte Vertragsstaaten:
AT BE CH DE FR GB IT LI LU NL SE

(56) Entgegenhaltungen:
EP-A-0 078 618
DE-A-1 692 236
FR-A-2 364 620

RESEARCH DISCLOSURE, Nr. 170, Juni 1978, Seite
51; "Nr. 17050: Chlorogenic acid extraction"

(73) Patentinhaber: Jacobs Suchard GmbH,
Langemarckstrasse 8-20, D-2800 Bremen 1 (DE)

(72) Erfinder: Bonne, Harry, In der Appenhalten 26, CH-
8706 Meilen (CH)
Erfinder: Schweinfurth, Hermann, Dr.,
Crüsemannallee 67, D-2800 Bremen (DE)

(74) Vertreter: Bolte, Erich, Dipl.- Ing., c/o Meissner &
Bolte Patentanwälte Hollerallee 73, D-2800
Bremen 1 (DE)

EP 0 151 772 B1

**Beschreibung**

Die Erfindung betrifft ein Verfahren zum Herstellen von Kaffee-Extrakt durch Extrahieren von gerösteten und gebrochenen Kaffeebohnen.

Es sind verschiedene Verfahren zum Herstellen von Instant-Kaffee bekannt. Üblicherweise werden die zu extrahierenden Kaffeebohnen geröstet, gemahlen bzw. gebrochen und extrahiert, worauf der erhaltene Extrakt konzentriert und getrocknet wird.

Bei der Extraktion ist es möglich, verschiedene wässrige Extraktionsstufen durchzuführen. So kann beispielsweise durch Extrahieren des gebrochenen Röstkaffees zunächst in einem Percolator mit heißem Wasser ein Primärextrakt gewonnen werden, der einen besonders hohen Anteil an röstkaffeetypischen Aromastoffen aufweist. Anschließend können die extrahierten Kaffeebohnen mit Prozeßwasser in einer oder mehreren weiteren Extraktionsstufen unter Erzielung eines sog. Sekundärextrakts weiter behandelt werden.

Bei bekannten Extraktionsverfahren für die Gewinnung von Kaffee-Extrakt ist der Geschmack häufig unbefriedigend. Um insoweit eine Verbesserung zu erzielen, sind verschiedene Verfahren entwickelt worden, um Extrakte oder Teilextrakte von geschmacklich ungünstigen Stoffen zu befreien.

Bekannt ist auch bereits das Abziehen von Aromafraktionen durch Wasserdampfdestillation. Die so gewonnenen Aromastoffe werden nach der Extraktion des Röstkaffees im übrigen dem Extrakt zur Aromaverbesserung wieder zugesetzt.

DE-A-1 692 236 beschreibt ein Verfahren zur Standardisierung des Säuregrades von Pulverkaffee, bei dem der gesamte bei der Extraktion von geröstetem Kaffee erhaltene wässrige Extrakt mit Ionenaustauscher behandelt wird, um dem Extrakt Säuren zu entziehen oder zuzusetzen, bis der gewünschte Säuregrad erreicht ist. Dieses Verfahren resultiert aus der Erkenntnis, daß die organoleptischen Eigenschaften wesentlich durch Konzentration und Art der enthaltenen Säuren bestimmt werden. Ein Nachteil der Behandlung des gesamten Extraktes nach DE-A-1 692 236 mit Ionenaustauscher liegt in der Absorption oder Veränderung von im Extrakt erwünschten, sogenannten "feinen Säuren" sowie anderen Substanzen, die geschmacklich positiv hervortreten, durch den Ionenaustauscher.

Der Erfindung liegt die Aufgabe zugrunde, ein Verfahren für die Herstellung von Kaffee-Extrakt vorzuschlagen, durch das im wirtschaftlich günstigem Rahmen Erzeugnisse mit verbesserten Geschmackseigenschaften gewonnen werden können.

Die Lösung dieser Aufgabe wird erfindungsgemäß in überraschend einfacher Weise durch die Merkmale des kennzeichnenden Teils von Patentanspruch 1, nämlich die Kombination der Verfahrensschritte

a) Kurzzeitrösten der Kaffeebohnen;
b) Brechen der Kaffeebohnen;
c) Bildung eines Aromadestillats durch Dampfdestillation;
d) Bildung eines wäßrigen Primärextrakts;
e) Bildung eines wäßrigen Sekundärextrakts;
f) Behandeln des Sekundärextrakts mit schwach basischem Ionenaustauscher;
g) Vereinen der in d) und f) gewonnenen Extrakte;
h) Konzentrieren der vereinten Extrakte;
i) Vereinen des Konzentrats mit dem in c) gewonnenen Aromadestillat,
erreicht.

Entsprechend dem Verfahrensschritt a) werden die Kaffeebohnen kurzzeitgeröstet ("short time roasted"). "Short-time-roasted"-Kaffee weist einen höheren Anteil an Kaffee-Aromastoffen auf als konventionell gerösteter Kaffee, wodurch die Ergiebigkeit höher liegt. Beim Kurzzeitrösten aufgrund bekannter Verfahren bzw. in bekannten Röstmaschinen mit Röstzeiten von vorzugsweise 1 bis 3 min wird Röstkaffee mit einem höheren Anteil an Aroma- und Extraktionsstoffen gewonnen. Auch ist der Anteil an geschmacklich erwünschten "feinen" Säuren höher als bei "normal geröstetem" Kaffee.

Die Bildung eines Sekundärextraktes und die folgende Behandlung des Sekundärextrakts mit schwach basischem Ionenaustauscher gemäß den Verfahrensschritten e) und f) im Anschluß an die Schritte a) bis d) sind für die mit dem erfindungsgemäßen Verfahren erreichten Geschmacksverbesserung des Kaffee-Extrakts von besonderer Bedeutung.

Durch die Anwendung des Ionenaustauschers wird einerseits der pH-Wert des Extrakts verändert, nämlich angehoben. Hieraus ergibt sich in Verbindung mit dem Primärextrakt und evtl. den durch vorherige Dampfdestillation entzogenen Aromastoffen ein insgesamt günstiger pH-Wert des Kaffee-Extrakts. Dabei ist die Erkenntnis von Bedeutung, daß der Sekundärextrakt Säuren enthält, die eine ungünstige Wirkung auf den Geschmack des Kaffee-Extrakts ausüben ("unerwünschte Säuren"). Hingegen enthält der Primärextrakt für die Geschmacksbildung vorteilhafte Säuren ("feine Säuren"). Ein Merkmal des erfindungsgemäßen Verfahrens ist demnach eine geschmacklich wirksame Reduzierung der unerwünschten Säuren des Sekundärextrakts.

Darüber hinaus beruht die überraschend günstige Wirkung der Behandlung des Sekundärextrakts mit (schwach basischen) Zonenaustauschern offensichtlich auch in der Adsorptionswirkung des Ionenaustauschers in bezug auf (nicht identifizierbare) Stoffe, die ebenfalls eine günstige Wirkung auf die Geschmacksbildung des Kaffee-Extrakts ausüben.

Das durch die Erfindung erzielte Ergebnis der Geschmacksverbesserung von Extrakt-Kaffee beruht im wesentlichen darauf, daß dem gerösteten, gebrochenen Kaffee in Fraktionen - Aromadestillation, primäre und sekundäre Extraktion - Inhaltsstoffe entzogen und zunächst getrennt gesammelt werden. So kann eine gezielte Abstumpfung der "unerwünschten Säuren" im Sekundärextrakt erfolgen. Die empfindlichen Aromastoffe und die "feinen" Säuren bleiben so unverändert. Nach Behandlung des Sekundärextrakts erfolgt eine Vereinigung der Fraktionen und nachfolgendes Konzentrieren.

Weitere Details des erfindungsgemäßen Verfahrens sind in den Unteransprüchen 2 bis 6 angegeben.

Bei einem bevorzugten Ausführungsbeispiel des erfindungsgemäßen Verfahrens werden die Kurzzeitgerösteten Kaffeebohnen in üblicher Weise gebrochen, insbesondere bei einem Mahlgrad für 3,5 mm Korngröße. Der gebrochene Röstkaffee kann nun unmittelbar einer nachfolgenden Heißwasserextraktion unterworfen werden. Vor dieser Extraktion können dem Röstkaffee in bekannter bzw. geeigneter Weise Aromastoffe entzogen werden, die aus Gründen der Schonung der Extraktion und Konzentration nicht ausgesetzt, sondern nach Durchführung dieser Verfahrensschritte dem Extrakt wieder zugesetzt werden. Die Absonderung der Aromastoffe kann insbesondere durch Wasserdampfdestillation erfolgen. Vorzugsweise wird diese Dampfdestillation bei einem derartigen Druck ausgeführt, daß die Behandlungstemperatur unterhalb 100°C liegt.

In einem beigefügten Fließschema ist der Gang des bevorzugten Ausführungsbeispiels des Verfahrens wiedergegeben.

In einem Percolator E1 wird eine Dampfdestillation des Röstkaffees durchgeführt. Das durch Vakuumbehandlung und anschließende Kondensation erzielte Destillat wird mit den übrigen Extrakten nach deren Konzentrieren vereint.

Der beispielsweise nach dem vorstehenden Verfahren behandelte Röstkaffee wird mit heißem Wasser in einem gesonderten Extraktionskreislauf extrahiert (Percolatoren E2 .. Ei). Hierbei wird ein sog. Primärextrakt mit hohem Anteil an Aromastoffen und "feinen Säuren" gewonnen. Die Extraktion erfolgt in einer üblichen Festtstoff-Extraktionseinrichtung, die mit Wasser unter erhöhten Temperaturen betrieben werden kann. Geeignet ist beispielsweise ein Percolator. Das Prozeßwasser wird erwärmt, durch die Percolaturen E2 .. Ei geführt und der erhaltene Primärextrakt (PE) mit einem in nachfolgend beschriebener Weise gewonnenen und behandelten Sekundärextrakt (SE) vor dem Konzentrieren der wässrigen Extrakte vereint. Die Primärextraktion erfolgt bei relativ niedrigen Temperaturen bis zu etwa 130°C, vorzugsweise bei etwa 100°C.

Nach dem Abziehen des so erhaltenen wässrigen Primärextrakts verbleibt der Röstkaffee in dem Extraktionsbehälter und wird in diesen Behälter der Sekundärextraktion unterworfen (Percolatoren En .. Ei+1). Diese erfolgt ebenfalls mit Wasser bei Temperaturen zwischen 130°C und 200°C, vorzugsweise bei etwa 170°C.

Wie aus dem "Fließschema" ersichtlich, wird mit Vorteil die Sekundärextraktion in der Weise durchgeführt, daß mehrere Percolatoren En .. Ei+1 nacheinandergeschaltet sind, durch die das Prozeßwasser hindurchgeleitet wird. Dieses tritt in den Percolator Ei+1 mit dem zuvor der Primärextraktion unterworfenen Röstkaffee. Der Percolator E1 mit dem höchsten Grad der Extraktion wird entfernt, entleert und für einen neuen Extraktionsgang vorbereitet, sobald ein nachfolgender Percolator nach Ausführung der Primärextraktion die Position des Percolators Ei+1 einnimmt. Dem Röstkaffee wird so ein Maximum an Sekundärextrakt (SE) entzogen.

Der Sekundärextrakt (SE) wird sodann über einen Ionenaustauscher I1 des Typs schwach basisch geleitet. Dieser bewirkt einerseits eine Anhebung des pH-Wertes des Sekundärextrakts. Der pH-Wert desselben kann im Bereich zwischen 4 und 5, beispielsweise bei 4, 5 liegen und durch den Ionenaustauscher (IA) auf 6 bis 7, insbesondere auf 6, 5, angehoben werden. Des weiteren werden durch den Ionenaustauscher (IA) noch nicht identifizierte Stoffe gebunden, die offensichtlich eine ungünstige Wirkung auf den Geschmack des Kaffee-Extrakts haben. Durch die Adsoprtionswirkung und die Beeinflussung des pH-Wertes des Sekundärextrakts wird eine deutliche, überraschende geschmackliche Verbesserung des Kaffee-Extrakts erzielt.

Der Ionenaustauscher in der Ausführung eines schwach basischen Anionenaustauschers, insbesondere in der OH⁻-Form, kann mikroporös oder makroporös sein. Besonders geeignet sind schwach basische Anionenaustauscher auf Polystyrol-Basis in Pulverform bzw. als Granulat (Kügelchen) Dem Ionenaustauscher ist weiterhin vorzugsweise ein Anteil (z. B. 9 %) an Diphenylbenzol zur Vernetzung beigefügt. Als besonders vorteilhaft haben sich Ionenaustauscher Typ II der Firma Merck sowie Ionenaustauscher Lewatit MP 62 der Firma Bayer AG erwiesen.

Die Behandlung des Sekundärextrakts im Ionenaustauscher erfolgt vorzugsweise in Chargen. Der Extrakt mit einem pH-Wert von beispielsweise 4, 5 wird durch den Ionenaustauscher hindurchgeleitet und an der Austrittsseite in einem Behälter aufgefangen. Dabei wird laufend der pH-Wert des behandelten Extrakts gemessen. Dieser nimmt von einem verhältnismäßig hohen Wert ausgehend nach und nach ab. Sobald ein pH-Wert in der angestrebten Größenordnung von beispielsweise 6, 5 erreicht ist, wird die Behandlung abgebrochen.

Die Behandlung im Ionenaustauscher kann auch kontinuierlich erfolgen. Die Menge des schwach basischen Ionenaustauschers, die Durchströmgeschwindigkeit bzw. Kontakt- oder Verweilzeit des Extrakts im Ionenaus-tauscher sowie die Temperatur beeinflussen den pH-Wert der behandelten Lösung. Die vorgenannten Daten sind so zu wählen, daß die erwünschte Erhöhung des pH-Wertes für den Sekundärextrakt erzielt wird. Die Behandlungstemperatur liegt etwa bei Zimmertemperatur oder darunter. Durch Herabsetzen der Temperatur wird zwar die Reaktionsgeschwindigkeit vermindert, jedoch das Adsorptionsvermögen des Ionenaustauschers verbessert.

Nach Durchlauf einer Charge des Sekundärextrakts durch den Ionenaustauscher bzw. nach mehrmaligem Durchlauf wird dieser regeneriert. Zu diesem Zweck wird der Ionenaustauscher zunächst mit Wasser durchspült. Danach erfolgt eine Behandlung mit z. B. Natronlauge. Im Anschluß daran erfolgt eine erneute Spülung mit Wasser. Die vorstehende Reinigung des Ionenaustauschers erfolgt vorzugsweise bei erhöhter Temperatur von z. B. 40°C bis 80°C.

Der im vorstehenden Sinne behandelte Sekundärextrakt, eine klare, braune Flüssigkeit, wird mit dem Primärextrakt vereinigt und eingedickt, beispielsweise in üblichen Verdampfern. Danach wird das evtl. eingangs durch Vakuumextraktion gewonnene Destillat dem Konzentrat zugefügt. Das Gesamtgemisch kann dann in üblicher Weise getrocknet werden, beispielsweise in üblichen Sprühtrocknungs- oder Gefriertrocknungsverfahren.

Das vorstehend erläuterte Verfahren ist - unter Einschluß des Kurzzeitröstens - in dem beigefügten "Blockschema" dargestellt. Des weiteren ist dort von der Dampfdestillation zur Absonderung von Aromastoffen vor den Extraktionsverfahren Gebrauch gemacht.

Der nach dem erfindungsgemäßen Verfahren gewonnene Kaffee-Extrakt enthält eine deutliche Aromaverbesserung, obwohl der Sekundärextrakt mit verwendet wird. Durch die Verarbeitung des Sekundärextrakts ist durch die Wirtschaftlichkeit des Verfahrens gewährleistet, da eine höhere Ausbeute des Röstkaffees unter Vermeidung geschmacklicher Nachteile gegeben ist.

Die nachfolgenden Beispiele dienen zur Erläuterung der Erfindung, wobei das Beispiel 1 Ergebnisse unter Verwendung von "normal" geröstetem und Beispiel 2 Ergebnisse auf der Grundlage von kurzzeitgeröstetem Rohkaffee zeigen.

**Beispiel 1**

**1. Rohkaffee Mischung**

Komponente:    Äth. Mocca   20 %
                   Santos       25 %
                   Guat.        15 %
                   Elfenbein    20 %
                   Cameroun   20 %

**2. Rösten** (Langzeitrösten)

Probat Batchröster
Farbwert 11
Röstzeit 11 min 55 s.

Gasdruck 61 mbar
m Röka 5 kg
Gesamtmenge Röka 20 kg

**3. Mahlen**

Bühler-Miag-Mahlstuhl (Technikum)
Spaltweiten  oben 3,4 mm
              unten 2,4 mm
Schüttdichte ps 308 g/ltr.
Korngröße $d_{50}$ 3,1 mm

**4. Vakuumstrippen**

Technikumanlage
Röka Einwaage     4 000 g
Druck                100 mbar
SD-Menge          500 g (SD-Dampfdestillat)
Strippfaktor       $\dfrac{m\ SD}{m\ R\ddot{o}ka} = 0{,}125$

**5. Split-Up Extraktion**

Pilotanlage

Primärextr.   -Röka Menge 1,9 kg

-Prozeßwasser -Temp. am Eintritt ~ 100°C
-Druck ~ 10 bar
-Menge 60 l/h
-Ablaßmenge 30 kg
-Feststoff 1,31 %
-Ausbeute 20,7 %
-pH 5,10

Sekundärextr.Röka Menge 1,9 kg
-Prozeßwasser -Temp. am Eintritt
170°C ~ 170°C
-Druck ~ 17 bar
-Menge 60 l/h
-Ablaßmenge 29,5 kg
-Feststoff 1,18 %
-Ausbeute 18,3 %
-pH 4,5

**6. Separieren**

Westfalia Separator
Mengenstrom ~ 100 l/h
vor Separieren     - TS 1,17 % (TS = Trockensubstanz)
                   - pH 4,58
nach Separieren
                   - TS 1,10 %
                   - pH 4,59
TS-Verlust ~ 6 %

**7. Ionenaustauscherbehandlung**

Pilotanlage
Säulenvolumen = Ionenaustauschervolumen = 4 l = 2 kg
Ionenaustauscher   Merck Typ II, schwachbasischer
                   Anionenaustauscher
Verfahrensparameter:   Temperatur = Raumtemp.
                       Volumenstrom Extr. 30 l/h
                       Gesamtmenge Extr. 40 l
                       spez. Belastung 7,5 l/h
                       Extr. pro 1 IA
Extr. vor Behandlung   - pH 4,59
                       - TS 1,10 %
Extr. nach Behandlung  - pH 6,55
                       - TS 1,00 %
TS-Verlust ~ 9 %

**8.** Mischen von Primär- und Sekundärextrakt im Verhältnis der bei der Extraktion anfallenden Mengen.

**9. Konzentration**

Centritherm
Parameter:   Heizdampftemp. 65°C
             Verdampfungsdruck 75 mbar
             Verdampfungstemp. 38°C
             Aufgabemenge Extr. 30 l/h
pH 5,46
TS 20 %

**10. Beimpfen**

des Extraktes mit Vakuum SD
Impfmenge = 100 %
pH 5,41

### 11. Gefriertrocknung

Pilotanlage G 06
Parameter: Kondensatortemp. - 43°C
Kondensatordruck 0,47 mbar
Heizplattentemp. 35°C
Gesamttrocknungszeit 3 Std.

### Beispiel 2

### 1. Rohkaffee-Mischung

Komponente:
| | |
|---|---|
| Äth. Mocca | 20 % |
| Santos | 25 % |
| Guat. | 15 % |
| Elfenbein | 20 % |
| Cameroun | 20 % |

### 2. Rösten

Jetzone Batchröster
| | |
|---|---|
| Farbwert | 11 |
| Röstzeit | 90 s |
| Temp. | 308°C |
| $\Delta p$ | 11,3 mbar |
| m Roka | 400 g |

Gesamtmenge Röka 20 kg

### 3. Mahlen

Bühler-Miag-Mahlstuhl (Technikum)
Spaltweiten oben 3,4 mm
unten 2,4 mm
Schüttdichte $\rho s = 264$ gl
Korngröße $d_{50} = 3,1$ mm

### 4. Vakuumstrippen

Technikumanlage
| | |
|---|---|
| Röka Einwaage | 3 500 g |
| Druck | 100 mbar |
| SD-Menge | 437,5 g |
| Strippfaktor | $\dfrac{m\ SD}{m\ Röka} = 0,125$ |

### 5. Split-Up Extraktion

Pilotanlage

| | | |
|---|---|---|
| Primärextr. | -Röka Menge 1,87 kg | |
| | -Prozeßwasser | -Temp. am Eintritt ~ 100°C |
| | | -Druck ~ 10 bar |
| | | -Menge 60 l/h (durchgepumpte Menge) |
| | -Ablaßmenge | 30 kg |
| | -Feststoff | 1,52 % |
| | -Ausbeute | 24,4 % (bez. auf Ausgangsmenge) |
| | -pH | 4,98 |
| Sekundärextr. | -Röka Menge | 1,87 kg |
| | -Prozeßwasser | -Temp. am Eintritt ~ 170°C |
| | | -Druck ~ 17 bar |
| | | -Menge 60 l/h |
| | -Ablaßmenge | 27,5 kg |

-Feststoff      1,33 %
-Ausbeute     19,5   %
-pH            4,4

**6. Separieren**

Westfalia Separator
Mengenstrom 100 l/h
vor Separieren      - TS 1,32 %
                        - pH 1,38
nach Separieren    - TS 1,30 %
                        - pH 4,38

**7. Ionenaustauscherbehandlung**

Pilotanlage
Säulenvolumen = Ionenaustauschervolumen = 4 l = 2 kg
Ionenaustauscher   Merck Typ II, schwachbasischer
                               Anionenaustauscher
Verfahrensparameter:     Temperatur = Raumtemp.
                          Volumenstrom Extr. = 30 bis 35 l/h
                          Gesamtmenge Extr. = 40 l
                          Spez. Belastung = 7,5 ./. 9 l/h Extr. pro l 1A
Extr. vor Behandlung     - pH 4,38
                         - TS 1,30 %
Extr. nach Behandlung    - pH 6,54
                         - TS 1,20 %

TS-Verlust ~ 8 %

**8.** Mischen von Primär- und Sekundärextrakt im Verhältnis der bei der Extraktion anfallenden Mengen

**9. Konzentratieren**

Centritherm
Parameter:    Heizdampftemp. 65°C
                 Verdampfungsdruck 75 mbar
                 Verdampfungstemp. 38°C
                 Aufgabemenge Extr. 30 l/h
pH 5,46
TS 27 %

**10. Beimpfen**

des Extraktes mit Vakuum SD
Impfmenge = 100 %
pH 5,29

**11. Gefriertrocknung**

Pilotanlage G 06
Parameter:   Kondensatortemp. - 43°C
                Kondensatordruck 0,47 mbar
                Heizplattentemp. 35°C
                Gesamttrockungszeit 6 Std.

**Patentansprüche**

1. Verfahren zum Herstellen von Kaffee-Extrakt, gekennzeichnet durch folgende Verfahrensschritte:
a) Kurzzeitrösten der Kaffeebohnen;
b) Brechen der Kaffeebohnen;
c) Bildung eines Aromadestillats durch Dampfdestillation;
d) Bildung eines wässrigen Primärextrakts;

e) Bildung eines wässrigen Sekundärextrakts;
f) Behandeln des Sekundärextrakts mit schwach basischem Ionenaustauscher;
g) Vereinen der in d) und f) gewonnen Extrakte;
h) Konzentrieren der vereinten Extrakte;
i) Vereinen des Konzentrats mit dem in c) gewonnenen Aromadestillat.

2. Verfahren nach Anspruch 1,
dadurch gekennzeichnet,
daß die Bildung des wässrigen Primärextraktes bei Temperaturen bis 130°C, vorzugsweise bei 100°C durchgeführt wird.

3. Verfahren nach Anspruch·1 oder 2,
dadurch gekennzeichnet,
daß die Bildung des wässrigen Sekundärextraktes bei Temperaturen zwischen 130°C und 200°C, vorzugsweise bei 170°C durchgeführt wird.

4. Verfahren nach Anspruch 1 sowie einem oder mehreren der weiteren Ansprüche,
dadurch gekennzeichnet,
daß die Bildung des wässrigen Primärextraktes und/oder des wässrigen Sekundärextraktes in mehreren Percolatoren im Gegenstromprinzip durchgeführt wird.

5. Verfahren nach Anspruch 1 sowie einem oder mehreren der weiteren Ansprüche,
dadurch gekennzeichnet,
daß durch die Behandlung des Sekundärextrakts mit schwach basischem Ionenaustauscher sowohl der pH-Wert des Sekundärextrakts erhöht, als auch geschmacksbeeinträchtigende Substanzen des Sekundärextrakts durch den Ionenaustauscher adsorbiert werden.

6. Verfahren nach Anspruch 5 sowie einem oder mehreren der weiteren Ansprüche,
dadurch gekennzeichnet,
daß bei der Behandlung mittels schwach basischem Ionenaustauscher der pH-Wert des Sekundärextrakts auf vorzugsweise 6 bis 7 angehoben wird.

## Claims

1. Process for the preparation of coffee extract characterized by the following process steps:
(a) Short-time roasting of the coffee beans
(b) Breaking of the coffee beans
(c) Formation of an aroma distillate by means of steam distillation
(d) Formation of an aqueous primary extract
(e) Formation of an aqueous secondary extract
(f) Treatment of the secondary extract with a weakly basic ion exchanger
(g) Combining of the extracts obtained in (d) and (f)
(h) Concentration of the combined extracts
(i) Combining of the concentrate with the aroma distillate obtained in (c).

2. Process according to Claim 1, characterized in that the formation of the aqueous primary extract is carried out at temperatures up to 130°C, preferably at 100°C.

3. Process according to Claim 1 or 2, characterized in that the formation of the aqueous secondary extract is carried out at temperatures between 130°C and 200°C, preferably at 170°C.

4. Process according to Claim 1 and one or more of the further claims, characterized in that the formation of the aqueous primary extract and/or of the aqueous secondary extract is carried out in several percolators using the counter-current principle.

5. Process according to Claim 1 and one or more of the further claims characterized in that, as a result of the treatment of the secondary extract with a weakly basic ion exchanger, both the pH value of the secondary extract is increased and secondary extract substances detrimental to flavour are adsorbed by the ion exchanger.

6. Process according to Claim 5 and one or more of the further claims, characterized in that, during the treatment with a weakly basic ion exchanger, the pH value of the secondary extract is increased to preferably 6 to 7.

## Revendications

1. Procédé de préparation d'extrait de café, caractérisé par les opérations suivantes:
a) torréfaction de courte durée des graines de café,
b) fragmentation des graines de café,
c) formation d'un distillat aromatique par entraînement à la vapeur d'eau,
d) formation d'un extrait primaire aqueux,

e) formation d'un extrait secondaire aqueux,

f) traitement de l'extrait secondaire par un échangeur d'ions faiblement basique,

g) réunion des extraits obtenus sous d) et f),

h) concentration des extraits réunis,

i) réunion du concentré et du distillat aromatique produit sous c).

2. Procédé suivant la revendication 1, caractérisé en ce que la formation de l'extrait primaire aqueux est effectuée à des températures allant jusqu'à 130°C, de préférence de 100°C.

3. Procédé suivant l'une des revendications 1 et 2, caractérisé en ce que la formation de l'extrait secondaire aqueux est effectuée à des températures comprises entre 130 et 200°C, de préférence à 170°C.

4. Procédé suivant la revendication 1, ainsi que suivant une ou plusieurs des autres revendications, caractérisé en ce que la formation de l'extrait primaire aqueux et/ou de l'extrait secondaire aqueux est effectuée dans plusieurs percolateurs suivant le principe du contre-courant.

5. Procédé suivant la revendication 1 ainsi que suivant une ou plusieurs des autres revendications, caractérisé en ce que, par le traitement de l'extrait secondaire par un échangeur d'ions faiblement basique, non seulement la valeur du pH de l'extrait secondaire est augmentée mais des substances de l'extrait secondaire, influençant la saveur, sont adsorbées par l'échangeur d'ions.

6. Procédé suivant la revendication 5 ainsi que suivant une ou plusieurs des autres revendications, caractérisé en ce que la valeur du pH de l'extrait secondaire est élevée de préférence à une valeur de 6 à 7 au cours du traitement à l'aide d'un échangeur d'ions faiblement basique.

RÖSTKAFFEE

En    Ei+1    Ei    E2    E1

W1    W2    W3    W4

P1

PROZESS-WASSER

SE

S1

P2

PROZESS-WASSER

IA

P3

PE

B1

V1

SD

B2

T1

LEGENDE:

E1... EXTRAKT BATTERIEN
W1...WÄRMEAUSTAUSCHER
P1... PUMPEN
B1... BEHÄLTER MIT RÜHRWERK
V1    VERDAMPFER
T1    TROCKNER

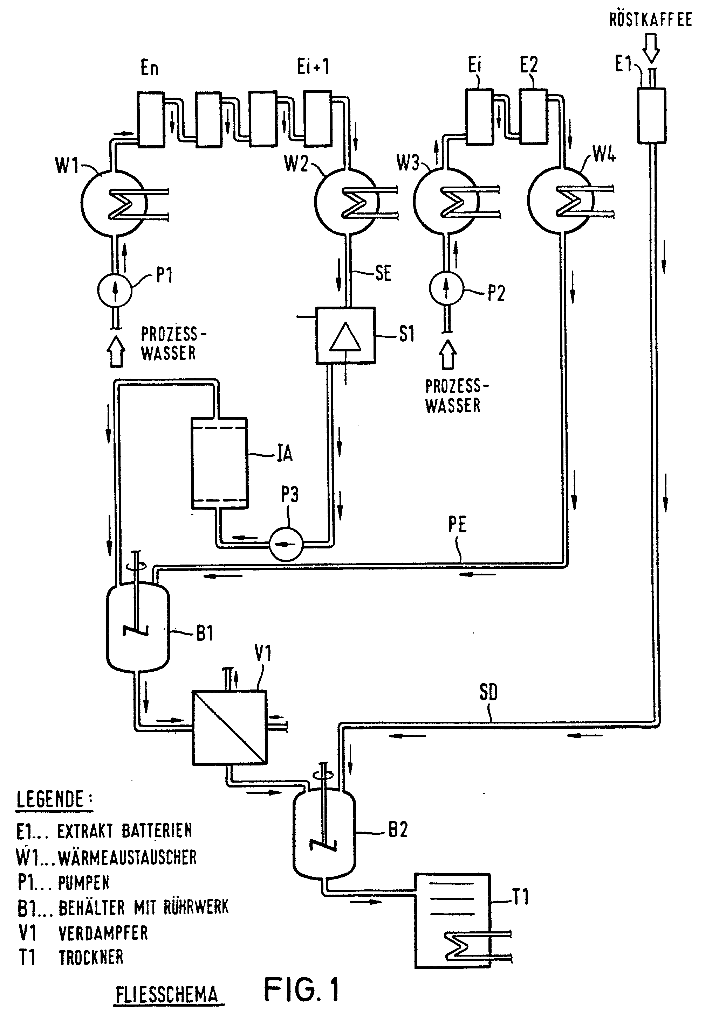

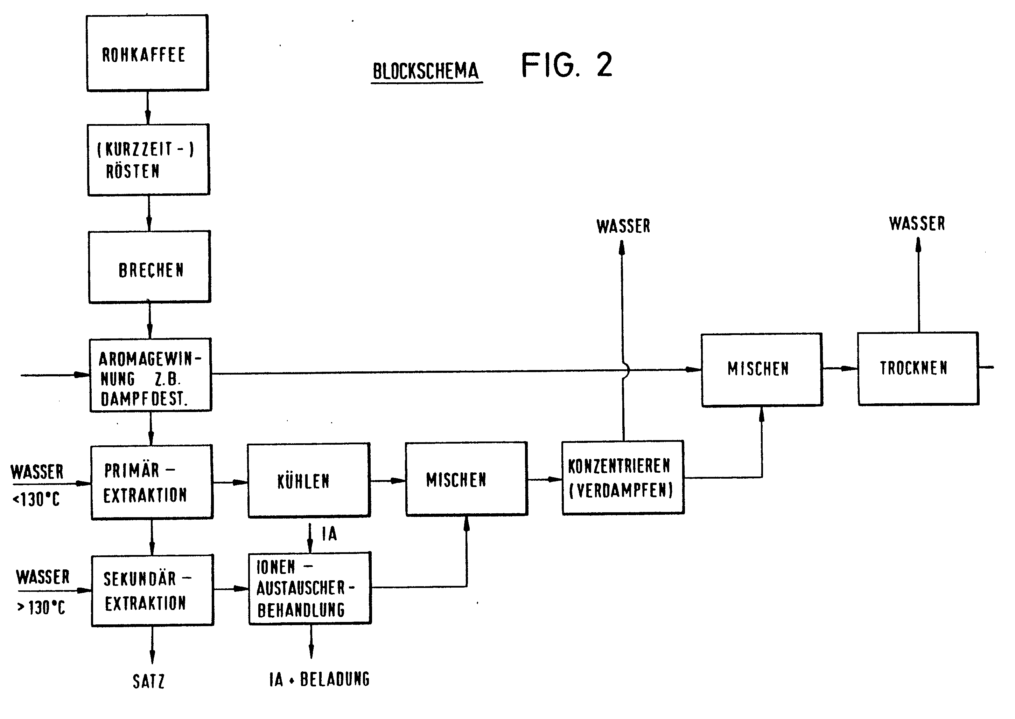

FLIESSCHEMA    FIG.1

1

ROHKAFFEE

↓

(KURZZEIT-) RÖSTEN

↓

BRECHEN

↓

AROMAGEWINNUNG Z.B. DAMPFDEST.

PRIMÄR-EXTRAKTION

WASSER <130°C

KÜHLEN

MISCHEN

KONZENTRIEREN (VERDAMPFEN)

MISCHEN

TROCKNEN

WASSER

WASSER

SEKUNDÄR-EXTRAKTION

WASSER >130°C

IONEN-AUSTAUSCHER-BEHANDLUNG

IA

SATZ

IA + BELADUNG

EP 0 151 772 B1

3